# FASCICULE DE BREVET EUROPEEN

(11) **EP 1 619 964 B1**
(45) Date de publication et mention de la délivrance du brevet: **06.05.2009**
(21) Numéro de dépôt: 03816149.3
(22) Date de dépôt: 30.12.2003
(51) Int. Cl.: A23L 1/232

(54) **PROCEDE DE PRODUCTION DE FUMEES ALIMENTAIRES PAR PYROLYSE, UTILISATION DE MOYENS PARTICULIEREMENT ADAPTES AUDIT PROCEDE, FUMEES ET DENREES ALIMENTAIRES AINSI OBTENUES**
HERSTELLUNGSVERFAHREN FÜR NAHRUNGSMITTELAROMASTOFF-RAUCH DURCH PYROLYSE, VERWENDUNG VON SPEZIELL DARAUF ANGEPASSTEN MITTELN UND RAUCH- UND NAHRUNGSPRODUKTE, DIE AUF DIESE WEISE ERHALTEN WURDEN
METHOD FOR PRODUCING FOOD-FLAVOURING SMOKE BY PYROLYSIS, USE OF MEANS SPECIALLY ADAPTED THEREFOR, AND SMOKE AND FOOD PRODUCTS THUS OBTAINED

(30) Priorité: 28.01.2003 FR 0300925
(43) Date de publication de la demande: 01.02.2006
(73) Titulaire: Sofral Société Francaise d'Alimentation, S.A., 67400 Illkirch Graffenstaden (FR)
(72) Inventeur: HOLZSCHUH, Pierre, D-77694 Kehl (DE); BÜCH, Georg, D-77746 Schütterwald (DE); WEILAND, Jean-Jacques, F-67330 Hattmatt (FR)
(74) Mandataire: Nuss, Pierre
(86) Numéro de dépôt international: PCT/FR2003/003935
(87) Numéro de publication internationale: WO 2004/077966

(56) Documents cités:
- DE-A- 1 692 108
- DE-A- 1 948 494
- FR-A- 2 336 632
- FR-A- 2 349 793
- FR-A- 2 680 638
- GB-A- 1 137 637
- US-A- 3 012 124
- US-A- 3 513 823
- US-A- 4 359 481
- US-A- 4 994 297
- US-A- 5 013 567
- US-A- 5 355 782
- PATENT ABSTRACTS OF JAPAN vol. 009, no. 272 (M-425), 30 octobre 1985 (1985-10-30) -& JP 60 117003 A (ISHIDA TEKKOSHO:KK), 24 juin 1985 (1985-06-24)
- DATABASE WPI Section Ch, Week 199640 Derwent Publications Ltd., London, GB; Class D13, AN 1996-400307 XP002232987 -& RU 2 050 782 C (KUDRYASHOV L S) 27 décembre 1995 (1995-12-27)
- DATABASE WPI Section Ch, Week 198610 Derwent Publications Ltd., London, GB; Class D14, AN 1986-067627 XP002256666 -& SU 1 173 969 A (KALIN TEKHRIBPROM COM) 23 août 1985 (1985-08-23)

## Description

La présente invention concerne le domaine de l'agro-alimentaire et plus précisément celui de la production d'arômes alimentaires par pyrolyse de matières organiques végétales. Elle concerne plus particulièrement la production de fumées, en particulier de fumées liquides, à l'aide d'un procédé employant un réacteur de pyrolyse du type réacteur mettant en oeuvre une vis sans fin chauffée par effet Joule.

La fumaison est, avec la salaison, une des techniques de conservation des aliments les plus anciennes. En effet, elle vit le jour peu après la maîtrise du feu par l'homme. A l'origine, le but recherché était une augmentation de la durée de conservation du produit traité. Par la suite, c'est principalement la recherche d'une qualité gustative et accessoirement celle d'un mode de présentation du produit, qui ont prévalu.

Des procédés archaïques ont été utilisés jusqu'au siècle dernier mais depuis, les techniques se sont modernisées et diversifiées, les méthodes de fumaison traditionnelles ne représentant plus qu'un petit volume à l'échelle mondiale.

Ainsi, de nouveaux produits ont, par exemple, vu le jour aux Etats-Unis à partir du XIX^{ième} siècle. Ces produits, encore appelés fumées liquides ou compositions de fumées liquides, ont été développés afin de remplacer le contact direct de l'aliment avec la fumée et sont obtenus en condensant les fumées gazeuses obtenues par pyrolyse d'une matière organique végétale, le plus souvent du bois, sous forme liquide.

Il est en effet connu que la pyrolyse de matières végétales, en particulier la pyrolyse de particules ou de copeaux de bois, induit la formation de molécules aromatiques lors des processus de décomposition thermique de ladite matière végétale. La nature chimique des arômes obtenus dépend essentiellement des paramètres de traitement, tels que la température de pyrolyse, le temps de séjour ou encore l'atmosphère gazeuse utilisés au cours de la réaction de pyrolyse.

Par ailleurs, la majeure partie des composés chimiques constituant la fumée obtenue lors de la pyrolyse est liquide à température ambiante. En raison de multiples avantages, ces produits ont tendance à constituer peu à peu les nouveaux standards de production des aliments fumés. Ainsi les fumées liquides sont notamment utilisées de manière avantageuse lors de la fumaison de jambons, saucisses, poissons, poitrines etc., un goût fumé ainsi qu'une coloration brune typique, similaires à ceux observés lors de fumaisons traditionnelles étant alors obtenus.

Les fumées liquides constituent des mélanges complexes pouvant comprendre plus de 1000 composés chimiques différents, dont 400 ont été clairement identifiés. Ces composés appartiennent généralement à des familles chimiques dont les principales sont les acides carboxyliques, les carbonyles, les phénols et les hydrocarbures aromatiques polycycliques.

A titre d'exemple d'une composition typique de fumée liquide on peut citer le brevet US 3 106 473.

Schématiquement, on admet que les acides organiques ont une action sur la conservabilité des denrées fumées, que les phénols ont une action sur le goût des denrées fumées et que les composés carbonylés sont à l'origine de la couleur des produits fumés. Toutefois, en raison de l'extrême complexité chimique des fumées liquides, des synergies entre les différents composés chimiques sont plus que probables.

Un certain nombre de composés indésirables sont également produits lors des procédés de pyrolyse. Les hydrocarbures aromatiques polycycliques (HAP) sont des composés toxiques produits lors de pyrolyses à haute température de matières organiques. Ces composés doivent être éliminés des fumées liquides ou leur teneur doit, pour le moins, être minimisée. Les normes actuellement en vigueur en Europe imposent un taux maximal de 10 ppb de benzo[a]pyrène et de 20 ppb de benzoanthracène dans les fumées liquides.

Le contrôle des taux d'hydrocarbures aromatiques polycycliques dans les fumées liquides permet ainsi de minimiser les risques sanitaires par rapport aux méthodes traditionnelles de fumaison.

Pour la production de fumées aromatiques, divers réacteurs de pyrolyse ont été développés au cours de ces dernières décennies.

Dans un premier type de réacteur décrit dans le brevet américain US 4 298 435, la pyrolyse peut être effectuée dans un four tournant incliné à un angle de 5°. Un tel four est constitué d'un calcinateur rotatif comprenant un tube d'acier inoxydable que l'on peut porter à la température voulue. Le bois entre dans le tube à une température de 480 °C de telle façon que le seul apport d'oxygène provient de l'air entraîné par la sciure au moment du chargement.

Dans un second type de réacteur décrit dans le brevet américain US 3 875 314, la pyrolyse est effectuée à l'aide d'un convoyeur qui passe dans une chambre où règne une température comprise entre 600 °C et 750 °C.

Dans un troisième type de réacteur décrit dans le brevet américain US 4 994 297, une pyrolyse ultra-rapide dite « flash » (vitesse de montée en température de 1000 °C/s) permet de produire des fumées liquides ayant un rapport carbonyles/phénols supérieur aux fumées obtenues par des méthodes conventionnelles. La fumée qui est produite par ce type de réacteur a un pouvoir de coloration plus prononcé mais apporte un goût fumé moins intense aux produits alimentaires traités. Le rendement en jus pyroligneux est très intéressant, car bien supérieur à ceux obtenus par des pyrolyses classiques. La sciure de bois ou de cellulose est chauffée entre 450 °C et 650 °C en 1 seconde. Le temps de séjour des gaz émis est de 0,03 secondes à 2 secondes dans le réacteur puis les gaz sont évacués (en moins de 0,6 secondes) afin de les refroidir à 350 °C.

Dans un quatrième type de réacteur décrit dans le brevet américain US 4 883 676, la pyrolyse est produite en assurant un balayage d'air sec à haute température sur une fine couche (2 cm au maximum) de sciure sèche. Le rendement atteint alors 90 % au lieu de 45-50 % par des méthodes conventionnelles. Le gaz produit est très riche en composés condensables et aucun goudron n'est produit, ledit balayage limitant les réactions secondaires qui sont précisément à l'origine de la formation des goudrons. En opérant en batch, la température de pyrolyse doit être de 600 °C, alors que lorsque l'on travaille en semi-continu, la température optimale de pyrolyse est seulement de 290 °C.

La pyrolyse du bois peut également être effectuée sous vapeur d'eau comme décrit dans le brevet US 4 359 481, la température de pyrolyse étant alors de 400 °C.

Le brevet DE1948494 décrit également un réacteur qui emploi de radiations électromagnétiques pour chauffage.

Or, la plupart de ces installations et des procédés ne permettent pas un contrôle strict de la température de pyrolyse ou des temps de séjour.

La présente invention a pour but de pallier au moins certains des inconvénients précités.

A cet effet elle a pour objet un procédé qui s'apparente à une distillation destructive ou à une thermo-modification de substances végétale, notamment du bois.

Conformément à la présente invention, le procédé de production de fumées destinées à une fumaison de denrées agro-alimentaires, lesdites fumées étant obtenues par pyrolyse d'une matière organique, de préférence végétale, est caractérisé en ce qu'il comprend essentiellement les étapes consistant à :
- introduire ladite matière organique à pyrolyser dans un réacteur de pyrolyse comprenant essentiellement une enceinte chauffable sensiblement hermétique contenant au moins une vis sans fin rotative, ladite au moins une vis étant chauffée par effet Joule et recevant ladite matière organique, ladite matière étant introduite à une extrémité de ladite au moins une vis, le chauffage de la matière organique en vue de sa pyrolyse se faisant par chauffage direct de la ou des vis sans fin rotatives, par chauffage électrique par effet Joule,
- chauffer ladite matière organique dans ladite enceinte à une température comprise entre 200 °C et 800°C, de préférence entre 300 °C et 400 °C, afin d'en provoquer la pyrolyse lors de son déplacement, sous l'effet de la rotation de ladite au moins une vis et,
- extraire la matière organique consumée et les fumées produites au niveau de l'autre extrémité de ladite au moins une vis.

La présente invention a encore pour objet l'utilisation d'un réacteur de pyrolyse selon l'invention du type comprenant essentiellement une enceinte chauffable sensiblement hermétique contenant au moins une vis sans fin rotative chauffée par effet Joule, ladite au moins une vis recevant une matière organique à pyrolyser, pour la production de fumées destinées à une fumaison de denrées alimentaires, pour la production de fumées liquides et pour la production de charbon de bois.

Elle a encore pour objet les fumées destinées à une fumaison de denrées alimentaires obtenues par le procédé selon l'invention, ainsi que les fumées liquides obtenues par condensation desdites fumées.

Enfin, elle a également pour objet une denrée alimentaire fumée par la mise en oeuvre d'une fumée ou d'une fumée liquide selon l'invention.

L'invention sera mieux comprise, grâce à la description ci-après, qui se rapporte à un mode de réalisation préféré, donné à titre d'exemple non limitatif.

Le but du procédé selon la présente invention est de produire des fumées par pyrolyse d'une matière organique, de préférence à partir de la pyrolyse de particules de bois ou de matières végétales. Avantageusement, ces fumées peuvent être condensées sous forme liquide afin de produire des produits encore appelés « fumées liquides ».

Conformément à l'invention, le procédé de production de fumées destinées à une fumaison de denrées agro-alimentaires, lesdites fumées étant obtenues par pyrolyse d'une matière organique, de préférence végétale est caractérisé en ce qu'il comprend essentiellement les étapes consistant à :
- introduire ladite matière organique à pyrolyser dans un réacteur de pyrolyse comprenant essentiellement une enceinte chauffable sensiblement hermétique contenant au moins une vis sans fin rotative chauffée par effet Joule recevant ladite matière organique, ladite matière étant introduite à une extrémité de ladite au moins une vis,
- chauffer ladite matière organique dans ladite enceinte à une température comprise entre 200 °C et 800 °C, de préférence entre 300 °C et 400 °C, afin d'en provoquer la pyrolyse lors de son déplacement, sous l'effet de la rotation de ladite au moins une vis et,
- extraire la matière organique consumée et les fumées produites au niveau de l'autre extrémité de ladite au moins une vis.

Dans une variante particulièrement utile, le procédé selon la présente invention est, caractérisé en ce que la matière organique est séchée par préchauffage avant d'être pyrolysée, de préférence dans au moins une zone de préchauffage spécifique prévue dans le réacteur et plus préférentiellement par chauffage électrique de ladite ou desdites zones par effet Joule.

Ainsi, il devient possible de traiter tous types de matières organiques dans le même dispositif. La température et le temps de préchauffe et le taux d'humidité résiduelle peuvent être déterminés par l'homme du métier selon la nature et la quantité de la matière organique utilisée. Toutefois, on veillera, de préférence, à ne pas provoquer de pyrolyse lors de ladite opération préliminaire de séchage. En d'autres termes, la température de préchauffage de la matière organique est préférentiellement inférieure à la température de pyrolyse de ladite matière soit, de préférence inférieure à 200 °C.

Selon une autre caractéristique, le chauffage de la matière organique en vue de sa pyrolyse se fait par chauffage direct de la ou des vis sans fin rotatives, par chauffage électrique par effet Joule.

Le réacteur de pyrolyse conforme à la présente invention permet un traitement thermique en continu de matières végétales avec un contrôle strict des paramètres de traitement. Les possibilités de traitement du réacteur de pyrolyse selon l'invention permettent de produire des fumées, des fumées liquides, des copeaux de bois thermiquement modifiés, ainsi que du charbon de bois.

La présente invention permet ainsi une pyrolyse parfaitement contrôlée de la matière végétale.

Les fumées liquides ainsi obtenues peuvent être utilisées par pulvérisation d'un mélange air-distillat de fumée directement dans la cellule de fumage, trempage, douchage ou encore par ajout direct à la denrée alimentaire. La fumée ne contient ni goudrons ni hydrocarbures aromatiques polycycliques nocifs. La fumée ainsi produite correspond à l'intégralité de la fraction aromatique issue de la pyrolyse du bois obtenue par des procédés traditionnels.

Un réacteur du type de celui utilisé dans le cadre de la présente invention particulièrement bien adapté au procédé selon la présente invention est celui commercialisé sous la dénomination « SPIRAJOULE » par la société ETIA (Compiègne), par exemple tel que décrit dans la demande de brevet français n° 98 02530 du 03.03.1998 publiée sous le numéro FR 2 775 621 A1.

Un tel type de réacteur combine avantageusement la technologie de transport des particules par une vis sans fin entraînée en rotation avec la technologie du traitement thermique par effet Joule, et permet ainsi l'accès à des techniques évoluées de traitements thermiques de solides divisés. Ce réacteur permet ainsi le traitement thermique en continu de la matière organique à pyrolyser.

Le transport de la matière organique à pyrolyser est assuré par la rotation d'au moins une vis sans fin conventionnelle. La matière organique à pyrolyser est introduite de manière classique (alimentation manuelle ou automatique, trémie...) de préférence à l'une des extrémités de la vis sans fin ou des vis sans fin mises bout à bout évolue sous l'effet de la rotation desdites vis jusqu'à l'autre extrémité où elle est récupérée de manière également classique (bac de récupération ou analogue). La rotation peut, par exemple, être générée par un entraînement, de préférence réglable, desdites vis par un organe moteur classique, tel que par exemple un moteur électrique conventionnel. A titre indicatif, un moteur électrique d'une puissance d'environ 10 kW est suffisant pour assurer une vitesse de rotation en régime de croisière de l'ordre de 15 tr/mn d'une vis sans fin en acier inoxydable du type 316 L d'un poids d'environ 500 kg prévue pour un débit moyen de 1000 kg de matière organique à pyrolyser par heure.

La ou les vis sans fin chauffées rotatives traversent (de préférence horizontalement) une enceinte fixe et présentent une puissance de chauffe électrique par effet Joule suffisante pour apporter les calories nécessaires afin d'élever la température de la matière organique à pyrolyser soit directement soit indirectement. A titre d'exemple préféré, le passage d'un courant électrique dans la ou les vis sans fin rotatives permet de générer de la chaleur par effet Joule dans la masse desdites vis. Une puissance de l'ordre de 100 kW peut convenir afin d'atteindre les températures nécessaires à la mise en oeuvre du procédé selon l'invention

Grâce au procédé selon l'invention, l'atmosphère de traitement peut donc être strictement contrôlée. Le traitement de la matière organique peut donc être effectué sous gaz inerte (azote ou tout autre gaz inerte), sous gaz partiellement oxydant (mélange azote/oxygène à différentes concentrations en oxygène) ou encore sous dioxyde de carbone ou sous un recyclage des fumées produites (recyclage des gaz de pyrolyse lors du traitement thermique).

De manière particulièrement avantageuse, le procédé selon l'invention est donc caractérisé en ce que les fumées produites sont condensées à leur sortie du réacteur dans un dispositif de condensation adapté. A titre d'exemple non limitatif, on peut utiliser pour ledit dispositif de condensation, une colonne de condensation réfrigérée classique ou tout dispositif analogue bien connu de l'homme du métier.

De façon avantageuse, au moins une partie des gaz de pyrolyse présents à la sortie du dispositif de condensation est réinjectée dans le réacteur.

Selon une autre caractéristique, le procédé selon l'invention est encore caractérisé en ce que la pyrolyse se fait sous contrôle précis, à 0,1% près, de la teneur en volume en oxygène dans ledit réacteur et selon une autre caractéristique la pyrolyse se fait sous contrôle précis, à un degré Celsius près, de la température régnant dans ledit réacteur.

En effet, le contrôle de ces deux derniers paramètres permet avantageusement de réduire le risque d'incendie de l'installation, contrairement à la plupart des générateurs de fumées existants.

Les temps de séjour de la matière organique à pyrolyser peuvent également être fixés de façon précise. En effet, la technologie de la ou des vis sans fin rotatives chauffées permet un écoulement « piston » de la matière organique à traiter. Ainsi, le contrôle par tout moyen habituel de régulation adapté de la vitesse de rotation de la ou des vis sans fin permet de contrôler le temps de séjour de ladite matière dans le réacteur. Ce temps de séjour peut varier, selon les conditions, de quelques secondes à environ 2 heures.

La technologie du transport par vis sans fin rotatives chauffées permet de traiter des solides divisés à granulométrie large permettant de mettre en oeuvre une large gamme allant des poudres microniques à des morceaux de plusieurs centimètres (copeaux) de matière organique à pyrolyser.

De façon avantageuse, la matière organique pyrolysée est essentiellement constituée de plaquettes de bois, en particulier de bois destiné à l'aromatisation ou au vieillissement de vins et/ou de spiritueux.

Selon une variante, la matière organique pyrolysée est essentiellement constituée de fibres ou copeaux d'au moins une substance végétale telle que le bois, la cellulose, tout autre polysaccharide ou complexe ligno-cellulosique.

Comme expliqué, la température de pyrolyse (de 200 °C à 800 °C) ainsi que les profils de température sont parfaitement contrôlés au degré près. La possibilité d'une architecture électrique permettant de mettre en oeuvre plusieurs zones de chauffe indépendantes permet, le cas échéant, de contrôler le profil thermique de traitement de la matière végétale.

La décomposition thermique de la matière organique et notamment du bois est préférentiellement obtenue à de basses températures de pyrolyse notamment à l'aide de réacteurs du type indiqué plus haut (principalement entre 300 °C et 400 °C). Les fumées et fumées liquides contiennent alors peu d'hydrocarbures aromatiques polycycliques qui sont généralement formés à de hautes températures de pyrolyse (au-delà de 400 °C).

La présente invention a encore pour objet l'utilisation d'un réacteur de pyrolyse pour la mise en oeuvre du procédé selon l'invention du type comprenant essentiellement une enceinte chauffable sensiblement hermétique contenant au moins une vis sans fin rotative chauffée par effet Joule, ladite au moins une vis recevant une matière organique à pyrolyser, pour la production de fumées destinées à une fumaison de denrées alimentaires, pour la production de fumées liquides ainsi que pour la production de charbon de bois.

Les avantages de l'utilisation d'un tel réacteur pour le traitement thermique de matières végétales sont multiples.

En effet, un traitement thermique homogène de matière organique à granulométrie variable (par exemple sciure de bois de quelques microns à plusieurs centimètres) est possible par avancement « piston » de la matière dans le réacteur et par un contact intime entre la matière végétale et la vis sans fin chaude. L'écoulement « piston » permet de contrôler avec précision la température de la matière et les temps de séjour.

L'utilisation d'au moins une vis sans fin rotative chauffée permet également l'obtention d'une surface d'échange thermique très importante (40 m²) dans un réacteur de petites dimensions (6 m x 0,6 m de diamètre).

Le chauffage est assuré par conduction entre ladite ou lesdites vis et la matière végétale. Le procédé ne requiert pas l'utilisation de grosses quantités de gaz à gérer ou à dépolluer. Les risques de zones froides (pièges à suies) sont minimisés.

L'étanchéité du système permet, en outre, de minimiser les risques d'odeurs émises et d'exposition du personnel aux gaz de pyrolyse.

Le nettoyage de l'installation tel que par pyrolyse sous air ou par circulation d'un liquide de nettoyage est aisé et facilité par un accès aisé aux vis chauffantes.

L'effet Joule permet de générer les températures nécessaires (généralement de l'ordre de 350 °C) permettant une pyrolyse suffisante de la matière végétale lors de la production de fumées alimentaires.

Le rendement thermique de l'appareil est proche de 80 % par contact intime entre la matière végétale et lesdites vis chaudes de transport ainsi qu'une combinaison complexe de conduction, d'induction et de rayonnement vers le produit à chauffer.

Le transport par vis sans fin tournantes engendre peu d'abrasion de la matière organique à pyrolyser et limite les émissions de poudres de charbon. L'encrassement du réacteur par des dépôts de suies est peu important.

Dès lors, les réacteurs du type évoqué ci-dessus peuvent être avantageusement employés à la production de fumées. En effet, le procédé selon l'invention permet de produire une fumée dont la qualité et la concentration sont parfaitement contrôlées tout en minimisant les risques d'incendie.

A ce sujet il est particulièrement important de pouvoir maîtriser, dans un procédé mettant en oeuvre un tel type de réacteur, les principaux paramètres de fonctionnement et de traitement que sont la température de la pyrolyse (contrôlée au degré Celsius près) et la constitution chimique de l'atmosphère de traitement (contrôle précis de la concentration en oxygène). Dans ces conditions, les fumées produites par le procédé selon l'invention peuvent être totalement standardisées et sont avantageusement exemptes ou quasi-exemptes de goudron et d'hydrocarbures aromatiques polycycliques nocifs.

En outre, lesdites fumées peuvent être diluées avec de l'air chaud ou tout autre gaz en sortie de réacteur afin de produire des fumées plus ou moins concentrées. Elles peuvent alors directement enter dans une cellule de fumaison, sans autre étape de conditionnement ou de purification.

La présente invention a encore pour objet des fumées liquides obtenues par condensation de fumées selon l'invention ainsi qu'une denrée alimentaire fumée par la mise en oeuvre de telles fumées et/ou d'une fumée liquide.

Les exemples suivants donnés à titre non limitatif permettent de mettre en évidence certains avantages des objets de la présente invention.

### Exemple 1 :

De la sciure de hêtre sèche (10 % en poids d'humidité) est pyrolysée dans un réacteur de type de celui connu sous la dénomination « SPIRAJOULE » (Société ETIA). Le réacteur qui présente une zone de chauffe est portée successivement à une température de 340 °C, 350 °C, 360 °C, 370 °C puis 380 °C.

Les températures mesurées sur la matière organique sont respectivement de 340 °C, 350 °C, 360 °C, 370 °C et 380 °C. Cet exemple montre parfaitement la maîtrise en température lors du processus de pyrolyse de la matière organique à pyrolyser. Aucun phénomène de divergence en température n'est observé malgré l'existence de phénomènes exothermiques à de telles températures de pyrolyse, par exemple dans le cas du bois. Le réacteur du type précité permet un traitement thermique parfaitement contrôlé en température et en temps de séjour, en particulier pour la sciure de bois, contrairement à la plupart des générateurs de fumées existants.

### Exemple 2 :

De la sciure de chêne sèche (10 % en poids d'humidité) est pyrolysée dans un réacteur de type de celui de l'exemple 1. Le réacteur présente une seule zone de chauffe. La zone de chauffe est à une température de 350 °C. Les gaz condensables et incondensables sont acheminés vers un condenseur. La partie condensable des gaz de pyrolyse est récupérée sous forme liquide à la sortie du condenseur, tandis que les gaz incondensables (essentiellement du dioxyde de carbone) sont utilisés pour réaliser l'inertage de la zone de pyrolyse.

La « recirculation » des gaz incondensables permet un inertage très rapide et efficace de la zone de pyrolyse et permet de s'affranchir d'un apport externe de gaz neutre. Le rendement de conversion de la matière première en fumée liquide est de 36 %. Outre le rendement élevé de conversion, la fumée obtenue ne contient pas de goudrons. La composition de la fumée liquide obtenue après condensation est la suivante :

| | |
|---|---|
| Densité : | 1,11 kg/l |
| pH : | 1,8 |

Analyse en chromatographie phase gazeuse (% en poids) :
- acide acétique : 16 %
- carbonyles : 9%
- esters : 3 mg/ml
- furanes : 17 mg/ml
- lactones : 2,3 mg/ml
- phénols : 36 mg/ml

L'utilisation du procédé selon la présente invention permet donc de produire des fumées avec un rendement élevé et sans production de goudrons contrairement aux réacteurs et générateurs de fumées actuellement présents sur le marché.

La fumée liquide obtenue selon l'invention est riche en composés aromatiques (phénols) et en carbonyles. Ces derniers sont à l'origine de la coloration particulièrement efficace et réaliste des produits fumés avec les fumées selon l'invention dues aux réactions de Maillard avec les protéines contenues dans lesdites denrées alimentaires traitées.

La condensation indirecte de la fumée permet de récupérer l'ensemble des arômes et donc la totalité de la fraction aromatique contenue dans la fumée. Les essais réalisés sur des produits de charcuterie par atomisation à l'aide de cette fumée liquide mettent en évidence un goût fumé des produits finis, identique voire supérieur à celui observé en fumaison par des procédés traditionnels.

La présente invention a donc également pour objet une denrée alimentaire fumée par la mise en oeuvre de fumées et/ou d'une fumée liquide selon l'invention.

Le réacteur à vis sans fin rotatives chauffée(s) constitue ainsi un outil très performant de traitement de matière végétale. Outre l'application liée à la production de fumées destinées à la fumaison de denrées alimentaires ou aux fumées liquides, le réacteur susvisé peut également être utilisé avantageusement lors de traitement thermique de matières végétales fragmentées. Par exemple, il peut être utilisé pour la production de plaquettes de bois destinées à l'aromatisation ou au vieillissement de vins et spiritueux ; les composés aromatiques recherchés étant similaires à ceux recueillis dans les fumées liquides.

Le procédé selon l'invention est également approprié à la production de charbon de bois ou de charges végétales thermiquement modifiées incorporables dans des composites à base de plastique ou de liants hydrauliques.

## Revendications

1. Procédé de production de fumées destinées à une fumaison de denrées agro-alimentaires, lesdites fumées étant obtenues par pyrolyse d'une matière organique, de préférence végétale, **caractérisé en ce qu'**il comprend essentiellement les étapes consistant à :
- introduire ladite matière organique à pyrolyser dans un réacteur de pyrolyse comprenant essentiellement une enceinte chauffable sensiblement hermétique contenant au moins une vis sans fin rotative, ladite au moins une vis étant chauffée par effet Joule et recevant ladite matière organique, ladite matière étant introduite à une extrémité de ladite au moins une vis, le chauffage de la matière organique en vue de sa pyrolyse se faisant par chauffage direct de la ou des vis sans fin rotatives, par chauffage électrique par effet Joule,
- chauffer ladite matière organique dans ladite enceinte à une température comprise entre 200 °C et 800 °C, de préférence entre 300 °C et 400 °C, afin d'en provoquer la pyrolyse lors de son déplacement, sous l'effet de la rotation de ladite au moins une vis et,
- extraire la matière organique consumée et les fumées produites au niveau de l'autre extrémité de ladite au moins une vis.

2. Procédé selon la revendication 1, **caractérisé en ce que** la matière organique est séchée par préchauffage avant d'être pyrolysée, de préférence dans au moins une zone de préchauffage spécifique prévue dans le réacteur et plus préférentiellement par chauffage électrique de ladite ou desdites zones par effet Joule.

3. Procédé selon la revendication 1 ou 2, **caractérisé en ce que** les fumées produites sont condensées à leur sortie du réacteur dans un dispositif de condensation adapté.

4. Procédé selon l'une quelconque des revendications 1 à 3, **caractérisé en ce qu'**au moins une partie des gaz de pyrolyse présents à la sortie du dispositif de condensation est réinjectée dans le réacteur.

5. Procédé selon l'une quelconque des revendications 1 à 4, **caractérisé en ce que** la pyrolyse se fait sous contrôle précis, à 0,1 % près, de la teneur en volume en oxygène dans ledit réacteur.

6. Procédé selon l'une quelconque des revendications 1 à 5, **caractérisé en ce que** la pyrolyse se fait sous contrôle précis, à un degré Celsius près, de la température régnant dans ledit réacteur.

7. Procédé selon l'une quelconque des revendications 1 à 6, **caractérisé en ce que** la matière organique pyrolysée est essentiellement constituée de plaquettes de bois, en particulier de bois destiné à l'aromatisation ou au vieillissement de vins et/ou de spiritueux.

8. Procédé selon l'une quelconque des revendications 1 à 6, **caractérisé en ce que** la matière organique pyrolysée est essentiellement constituée de fibres ou copeaux d'au moins une substance végétale telle que le bois, la cellulose, tout autre polysaccharide ou complexe ligno-cellulosique.

9. Utilisation d'un réacteur de pyrolyse pour la mise en oeuvre du procédé selon l'une quelconque des revendications 1 à 8, du type comprenant essentiellement une enceinte chauffable sensiblement hermétique contenant au moins une vis sans fin rotative chauffée par effet Joule, ladite au moins une vis recevant une matière organique à pyrolyser, pour la production de fumées destinées à une fumaison de denrées alimentaires.

10. Utilisation selon la revendication 9, pour la production de fumées liquides.

11. Utilisation selon la revendication 9, pour la production de charbon de bois.

## Claims

1. Method for producing vapours intended for the flavouring of agricultural food products, the said vapours being obtained by the pyrolysis of an organic, preferably vegetable material, **characterised in that** the method essentially comprises the following steps:
- the said organic material to be pyrolysed is introduced into a pyrolysis reactor comprising essentially a substantially hermetic chamber that can be heated and which contains at least one rotating endless screw, the said at least one screw being heated by the Joule effect and receiving the said organic material, the said material being introduced at one end of the said at least one screw, such that the organic material is heated in order to pyrolyse it by direct electrical heating of the rotating endless screw or screws by the Joule effect,
- the said organic material is heated in the said chamber to a temperature between 200°C and 800°C, preferably between 300°C and 400°C, in order to bring about its pyrolysis while it is moving under the rotary action of the said at least one screw, and
- the used organic material and the vapours produced are extracted at the level of the other end of the said at least one screw.

2. Method according to Claim 1, **characterised in that** the organic material is dried by preheating before being pyrolysed, preferably in at least one specific preheat zone provided in the reactor and more preferably still by heating the said zone or zones electrically.

3. Method according to Claims I or 2, **characterised in that** the vapours produced are condensed on emerging from the reactor into a suitable condensation device.

4. Method according to any of Claims 1 to 3, **characterised in that** at least a proportion of the pyrolysis gases present at the outlet of the condensation device is reinjected into the reactor.

5. Method according to any of Claims I to 4, **characterised in that** the pyrolysis is carried out with precise control of the volume content of oxygen, accurate to 0.1%.

6. Method according to any of Claims 1 to 5, **characterised in that** the pyrolysis is carried out with precise control of the temperature in the said reactor, accurate to one degree Celsius.

7. Method according to any of Claims 1 to 6, **characterised in that** the pyrolysed organic material consists essentially of wood chips, in particular wood intended for the flavouring of wines and/or spirits.

8. Method according to any of Claims 1 to 6, **characterised in that** the pyrolysed organic material consists of fibres or shavings of at least one vegetable substance such as wood, cellulose, any other polysaccharide or ligno-cellulose complex.

9. Use of a pyrolysis reactor for implementing the method according to any of Claims 1 to 8, of the type comprising essentially a substantially hermetic chamber that can be heated and which contains at least one rotating endless screw that receives an organic material to be pyrolysed in order to produce vapours intended for the flavouring of food products.

10. Use according to Claim 9 for the production of liquefied vapours.

11. Use according to Claim 9 for the production of wood charcoal.

## Patentansprüche

1. Rauch-Herstellungsverfahren zum Räuchern von Nahrungsmittelaromastoffen, wobei dieser Rauch durch Pyrolyse eines organischen und vorzugsweise pflanzlichen Stoffs erlangt wird, **dadurch gekennzeichnet, dass** es im Wesentlichen die folgenden Etappen umfasst:
- Einleitung des organischen Stoffs zur Pyrolyse in einen Pyrolysereaktor, der im Wesentlichen einen nahezu hermetischen und heizbaren Behälter umfasst, welcher zumindest eine Endlosdrehschraube aufweist, wobei diese zumindest eine Schraube durch Joule-Effekt erhitzt wird und diesen organischen Stoff aufnimmt, wobei dieser Stoff an einem Ende dieser zumindest einen Schraube eingeleitet wird und die Erhitzung des organischen Stoffs zum Zwecke seiner Pyrolyse durch Direkterhitzung der Endlosdrehschraube(n) durch elektrische Heizung mit Joule-Effekt erfolgt.
- Erhitzung des organischen Stoffs in diesem Behälter auf eine Temperatur zwischen 200 °C und 800 °C und vorzugsweise zwischen 300 °C und 400 °C, um die Pyrolyse anlässlich seiner Bewegung unter der Rotationswirkung dieser zumindest einen Schraube zu erzielen, und
- Ausleitung des verbrauchten organischen Stoffs und des erzeugten Rauchs auf Ebene des anderen Endes dieser zumindest einen Schraube.

2. Verfahren nach Anspruch 1, **dadurch gekennzeichnet, dass** der organische Stoff durch Vorerhitzung vor der Pyrolyse vorzugsweise in zumindest einem spezifischen Vorerhitzungsbereich, der im Reaktor vorgesehen ist, und weiter vorzugsweise durch elektrische Heizung dieses oder dieser Bereiche durch Joule-Effekt getrocknet wird.

3. Verfahren nach Anspruch 1 oder 2, **dadurch gekennzeichnet, dass** der erzeugte Rauch am Ausgang aus dem Reaktor in einem geeigneten Kondensationssystem kondensiert wird.

4. Verfahren nach einem der Ansprüche 1 bis 3, **dadurch gekennzeichnet, dass** zumindest ein Teil der Pyrolysegase, die am Ausgang des Kondensationssystems vorhanden sind, erneut in den Reaktor eingespritzt wird.

5. Verfahren nach einem der Ansprüche 1 bis 4, **dadurch gekennzeichnet, dass** die Pyrolyse unter einer genauen Kontrolle des Gehalts an Sauerstoffvolumen im genannten Reaktor ± 0,1 % erfolgt.

6. Verfahren nach einem der Ansprüche 1 bis 5, **dadurch gekennzeichnet, dass** die Pyrolyse unter einer genauen Kontrolle der im Reaktor vorherrschenden Temperatur ± einem Grad Celsius erfolgt.

7. Verfahren nach einem der Ansprüche 1 bis 6, **dadurch gekennzeichnet, dass** der pyrolysierte organische Stoff im Wesentlichen aus Holzplaketten und insbesondere Holz für die Aromatisierung oder Alterung von Weinen und/oder Spirituosen besteht.

8. Verfahren nach einem der Ansprüche 1 bis 6, **dadurch gekennzeichnet, dass** der pyrolysierte Stoff im Wesentlichen aus Fasern oder Spänen von zumindest einer pflanzlichen Substanz wie Holz, Zellulose, allen sonstigen Polysacchariden oder zellulosehaltigen Komplexen gebildet wird.

9. Verwendung eines Pyrolysereaktors für die Umsetzung des Verfahrens nach einem der Ansprüche 1 bis 8, der im Wesentlichen einen nahezu hermetischen und erhitzbaren Behälter umfasst, welcher zumindest eine durch Joule-Effekt erhitzte Endlosdrehschraube aufnimmt, wobei diese zumindest eine Schraube einen organischen Stoff zur Pyrolyse zwecks Erzeugung von Rauch zur Räucherung von Nahrungsmitteln enthält.

10. Verwendung nach Anspruch 9 zur Erzeugung von flüssigem Rauch.

11. Verwendung nach Anspruch 9 zur Erzeugung von Holzkohle.
